# EUROPÄISCHE PATENTANMELDUNG

(11) **EP 2 568 223 A1**
(43) Veröffentlichungstag der Anmeldung: **13.03.2013**
(21) Anmeldenummer: 11180335.9
(22) Anmeldetag: 07.09.2011
(51) Int. Cl.: F24D 3/14, F24D 13/02, F24D 19/10

(54) **Bodenheizvorrichtung zur Erwärmung von Bodenflächen**

(71) Anmelder: Gummiwerk Kraiburg RELASTEC GmbH, 29410 Salzwedel (DE)
(72) Erfinder: Betzel, Udo, 91241 Aspertshofen 14 (DE)
(74) Vertreter: Trossin, Hans-Jürgen

(57) **Zusammenfassung**

Eine Bodenheizvorrichtung umfasst ein Plattenträgerbauteil (12), welches wenigstens eine Heizeinrichtung (14; 16) trägt, die wenigstens eine Wärmequelle (18, 20; 44) und umfasst eine Wärmeübertragungsanordnung (28; 48), wobei die Wärmeübertragungsanordnung (28; 48) ein mit der Wärmequelle (18, 20; 44) längs eines Anbringungsabschnitts (24, 26; 46) derselben wärmeübertragungsmäßig gekoppeltes, vom Plattenbauteil (18) gesondert ausgebildetes Wärmeleitungsteil (34; 54) mit einem ersten Material mit einer ersten Wärmeleitfähigkeit und wenigstens ein vom Plattenbauteil (12) gesondert ausgebildetes Wärmekapazitätsteil (36; 56) umfasst, welches mit dem Wärmeleitungsteil (34; 54) längs eines Kopplungsabschnitts (37; 57) des Wärmekapazitätsteils (36; 56) wärmeübertragungsmäßig gekoppelt ist, wobei das Wärmekapazitätsteil (36; 56) ein zweites Material (66) mit einer zweiten Wärmeleitfähigkeit aufweist, welche niedriger ist als die erste Wärmeleitfähigkeit.

## Beschreibung

Die vorliegende Erfindung betrifft eine Bodenheizvorrichtung zur Erwärmung von Bodenflächen, wobei die Bodenheizvorrichtung ein Plattenträgerbauteil umfasst, das wiederum eine Heizeinrichtung trägt.

Die Heizeinrichtung umfasst wenigstens eine Wärmequelle und eine Wärmeübertragungsanordnung, wobei die Wärmeübertragungsanordnung ein mit der Wärmequelle längs eines Anbringungsabschnitts derselben wärmeübertragungsmäßig gekoppeltes und vom Plattenbauteil gesondert ausgebildetes Wärmeleitungsteil umfasst. Das Wärmeleitungsteil umfasst wenigstens abschnittsweise, vorzugsweise größtenteils, ein erstes Material mit einer ersten Wärmeleitfähigkeit. Besonders bevorzugt ist das Wärmeleitungsteil aus dem ersten Material hergestellt.

Das Wärmeleitungsteil dient im Wesentlichen dazu, die von der Wärmequelle ausgehende thermische Energie aufzunehmen und über eine verglichen mit dem Anbringsungabschnitt der Wärmequelle vergrößerte Wärmeübertragungsfläche an die Außenumgebung abzugeben.

Aufgabe der vorliegenden Erfindung ist es, die Effizienz einer derartigen Bodenheizvorrichtung weiter zu erhöhen.

Diese Aufgabe wird erfindungsgemäß dadurch gelöst, dass die Wärmeübertragungsanordnung außerdem wenigstens ein Wärmekapazitätsteil umfasst, welches einen Kopplungsabschnitt aufweist, längs dem das Wärmekapazitätsteil mit dem Wärmeleitungsteil wärmeübertragungsmäßig gekoppelt ist. Durch die wärmeübertragungsmäßige Kopplung von Wärmeleitungsteil und Wärmekapazitätsteil wird ein Wärmeleitungspfad zwischen dem Wärmeleitungsteil und dem Wärmekapazitätsteil sichergestellt, so dass durch die zuvor genannte wärmeübertragungsmäßige Kopplung der Wärmequelle mit dem Wärmeleitungsteil und der weiteren wärmeübertragungsmäßigen Kopplung des Wärmeleitungsteils mit dem Wärmekapazitätsteil ein Wärmeleitungspfad von der wenigstens einen Wärmequelle zu dem wenigstens einen Wärmekapazitätsteil bereitgestellt ist.

Das Wärmekapazitätsteil weist gemäß der vorliegenden Erfindung ein zweites Material mit einer zweiten Wärmeleitfähigkeit auf, welche niedriger als die erste Wärmeleitfähigkeit ist.

Mit der geschilderten Ausbildung des Wärmekapazitätsteils kann sichergestellt werden, dass Wärmeenergie vermittels des Wärmeleitungsteils von der Wärmequelle zu dem Wärmekapazitätsteil übertragen wird. Bei Betrieb der Bodenheizvorrichtung wird somit auch die Temperatur des Wärmekapazitätsteils erhöht.

Auf Grund des im Wärmekapazitätsteil vorgesehenen zweiten Materials mit niedrigerer Wärmeleitfähigkeit als jener des ersten Materials des Wärmeleitungsteils wird sichergestellt, dass in einem hier besonders interessierenden Fall von instationärer Wärmeleitung während einer sich an eine Betriebsphase anschließende Nichtbetriebsphase (Abkühlphase) der Bodenheizvorrichtung eine im Wärmekapazitätsteil erreichte Temperatur nur mit gewisser zeitlicher Verzögerung durch Wärmeenergieübertragung an das mit dem Wärmekapazitätsteil wärmeübertragungsmäßig gekoppelte Wärmeleitungsteil verringert wird. Dadurch ist es möglich, selbst nach Abschalten der wenigstens einen Wärmequelle über die zuvor erwärmten Wärmekapazitätsteile eine Art "Nachheizen" der Heizeinrichtung zu bewirken, so dass die an der erfindungsgemäßen Bodenheizvorrichtung vorgesehene Heizeinrichtung eine Abgabe von Wärmeenergie über einen längeren Zeitraum als die eigentliche Betriebsdauer der Wärmequelle ermöglicht.

Die Wärmekapazitätsteile stellen somit eine Art Wärmespeicher der Heizeinrichtung dar, die ihre Wärmemenge auf Grund des zweiten Materials mit der niedrigeren Wärmeleitfähigkeit nur allmählich und sehr langsam abgeben. Während als erstes Material also vorzugsweise thermisch gut leitende Materialien, wie Metalle, insbesondere Kupfer oder/und Aluminium, vorteilhaft sind, um möglichst schnell möglichst viel Wärmeenergie von der Wärmequelle an die Außenumgebung und an das wenigstens eine Wärmekapazitätsteil abzuleiten, ist als zweites Material beispielsweise ein mineralisches Material, wie etwa Quarz, Glas, gebrannter Ton, Keramik, Steinmehl, Silikate und dergleichen von Vorteil, welches Wärme um Größenordnungen schlechter leitet, als die zuvor genannten Metalle.

Bei zweiten Materialien mit in etwa gleicher zweiter Wärmeleitfähigkeit ist dasjenige mit größerer spezifischer Wärmekapazität vorteilhaft, da bei Materialien mit höherer Wärmekapazität ein Eintrag oder ein Austrag einer vorbestimmten Wärmemenge zu einer geringeren Temperaturerhöhung führt, als bei einem Material niedrigerer spezifischer Wärmekapazität. Damit kann ein Material höherer Wärmekapazität bei gleicher Temperaturdifferenz zwischen Betriebszustand und Nichtbetriebszustand der Heizeinrichtung eine größere Wärmemenge speichern und diese somit über einen längeren Zeitraum abgeben.

Dies ist deshalb vorteilhaft, da sich bei Inbetriebnahme der Bodenheizvorrichtung aus einem abgekühlten oder wenigstens kälteren Nichtbetriebszustand die Heizeinrichtung zunächst so lange erwärmt, bis ein thermisches Gleichgewicht zwischen der Heizvorrichtung einerseits und der Außenumgebung der Heizvorrichtung hergestellt ist. Während dieser Aufheizphase der Heizeinrichtung findet in der Heizvorrichtung instationäre Wärmeleitung statt.

Wenn dann ein Zustand thermischen Gleichgewichts erreicht ist, wird genau diejenige Wärmemenge, die die Wärmequelle pro Zeiteinheit an die Wärmeübertragungsanordnung abgibt, von der Wärmeübertragungsanordnung wiederum an ihre Außenumgebung abgegeben. Dabei stellt sich näherungsweise eine konstante Temperatur zumindest des Wärmeleitungsteils der Wärmeübertragungsanordnung ein. Diese im stationären Gleichgewicht erreichte Temperatur des Wärmeleitungsteils ist umso gleichmäßiger über das Volumen des Wärmeleitungsteils ausgebildet, je höher dessen Wärmeleitfähigkeit ist und je länger der Gleichgewichtszustand andauert.

Da also eine im Wesentlichen konstante Temperatur des Wärmeleitungsteils eine die Erwärmung des Wärmekapazitätsteils begrenzende Randbedingung bildet, ist ein zweites Material mit höherer spezifischer Wärmekapazität bei gleicher Wärmeleitfähigkeit vorteilhafter als ein Material mit niedrigerer spezifischer Wärmekapazität. Denn bei gleicher Masse und gleicher Ausgangstemperatur ist nach Erwärmung auf die Gleichgewichtstemperatur im Material mit höherer spezifischer Wärmekapazität mehr Wärmeenergie enthalten.

Alternativ kann das zweite Material mit einem dritten Material durchmischt sein oder dieses umgeben, welches dritte Material eine höhere spezifische Wärmekapazität aufweist als das zweite Material.

Zwar soll grundsätzlich von der vorliegenden Erfindung nicht ausgeschlossen sein, dass nahezu die gesamte für eine wärmeübertragungsmäßige Kopplung mit dem Wärmekapazitätsteil zur Verfügung stehende Fläche des Wärmeleitungsteils tatsächlich mit einem entsprechend bemessenen Wärmeleitungsteil in Wärmeübertragungskontakt steht. Jedoch ist dies aus Gründen der Standfestigkeit der erfindungsgemäßen Bodenheizvorrichtung nicht bevorzugt. Denn bei dem zweiten Material handelt es sich sehr häufig um poröse oder aus pulverförmigen Materialien hergestellte Körper, welche nur eine geringe Duktilität aufweisen und somit leicht durch mechanische Spannungen beschädigt werden können. Da Bodenheizvorrichtungen in einem betriebsfertigen Zustand in der Regel mit schwellendem oder statischem Druck belastet sind, etwa durch Aufstellung eines Möbels über einer Bodenheizvorrichtung oder durch Begehen des über einer Bodenheizvorrichtung gelegenen Fußbodens, werden entsprechende mechanische Spannungen in die Heizeinrichtung der erfindungsgemäßen Bodenheizvorrichtung induziert.

Vorteilhafter ist es daher, das wenigstens eine Wärmekapazitätsteil zellenartig nur lokal an einem Kontaktflächenbereich des Wärmeleitungsteils vorzusehen und diesem Kontaktflächenbereich benachbarte Flächenbereiche frei von Wärmekapazitätsteilen zu lassen.

Grundsätzlich kann auch die Wärmequelle beliebige Gestalten aufweisen, wenngleich unterschiedliche Formen der Wärmequelle unterschiedlich stark bevorzugt sind. Bevorzugt ist eine möglichst kompakte Wärmequelle, welche wenigstens über eine gewisse Strecke hinweg Wärme an das Wärmeleitungsteil angeben kann. Hierzu kann vorgesehen sein, dass der Anbringungsabschnitt der Wärmequelle, das ist jener Abschnitt der Wärmequelle, über welchen hinweg die Wärmequelle tatsächlich in wärmeübertragungsmäßiger Kopplung mit der Wärmeübertragungsanordnung steht, längs einer Erstreckungsachse verläuft, längs welcher die Wärmequelle eine wesentlich größere Abmessung besitzt, als längs zweier zueinander und jeweils zur Erstreckungsachse orthogonaler Radiusachsen. Die genannten Radiusachsen definieren dann für den Anbringungsabschnitt eine radiale Richtung, während die Erstreckungsachsen eine axiale Richtung definiert. Vorzugsweise ist der Anbringungsabschnitt stabförmig, besonders bevorzugt geradlinig stabförmig, da eine geradlinige Stabform des Anbringungsabschnitts mit besonders geringem Fertigungs- und Montageaufwand wärmeübertragungsmäßig mit dem Wärmeleitungsteil koppelbar ist. Dabei ist die Querschnittsform des stabförmigen Anbringsabschnitts grundsätzlich beliebig, wenngleich ein eckenfreier Querschnitt bevorzugt und ein kreisförmiger Querschnitt besonders bevorzugt ist, da ein daraus resultierender kreiszylindrischer Stab in der Regel eine in Umfangsrichtung möglichst gleichmäßige Wärmeabgabe in radialer Richtung ermöglicht, während kantenbehaftete Stäbe an den Kanten auf Grund des dort größeren Oberflächen-Volumen-Verhältnisses in der Regel eine geringere Temperatur aufweisen, als die Oberfläche eines kreiszylindrischen Stabs mit gleicher Querschnittsfläche.

An einem derartigen längs einer Erstreckungsachse verlaufenden Anbringungsabschnitt erstreckt sich die Wärmeübertragungsanordnung, und dabei insbesondere das Wärmeleitungsteil, vorteilhafterweise längs der Erstreckungsachse eine vorbestimmte Strecke gemeinsam mit der Wärmequelle und erstreckt sich orthogonal zur Erstreckungsachse von der Wärmequelle weg. Dadurch kann die Wärme abgebende Fläche der Wärmequelle durch das Wärmeleitungsteil, verglichen mit der Situation ohne Wärmeleitungsteil, erhöht werden.

Ebenso kann der Kopplungsabschnitt des Wärmekapazitätsteils, das ist jener Abschnitt des Wärmekapazitätsteils, längs welchem dieses in Wärmeübertragungskopplung mit dem Wärmeleitungsteil der Wärmeübertragungsanordnung steht, längs einer Verlaufsachse verlaufen. Analog zur oben geschilderten Situation des Anbringungsabschnitts der Wärmequelle besitzt dann der Kopplungsabschnitt längs der Verlaufsachse eine wesentlich größere Abmessung als längs zweier zueinander und jeweils zur Verlaufsachse orthogonale Radialachsen. Wiederum definieren die Radialachsen für den Kopplungsabschnitt eine radiale Richtung, während die Verlaufsachse eine axiale Richtung des Kopplungsabschnitts definiert. Aus den oben zum Anbringungsabschnitt der Wärmequelle genannten Gründen ist auch der Kopplungsabschnitt des Wärmekapazitätsteils vorzugsweise stabförmig, besonders bevorzugt geradlinig stabförmig. Auch beim Kopplungsabschnitt sind aus Gründen möglichst gleichmäßiger Wärmeübertragung zwischen Wärmekapazitätsteil und Wärmeleitungsteil eine kreiszylindrische Stabform des Wärmekapazitätsteils bevorzugt.

Da als zweites Material auf Grund der bevorzugten absolut niedrigen Wärmeleitfähigkeit bei gleichzeitiger Beständigkeit auch bei hohen Temperaturen häufig ein mineralisches Material, wie Quarz, Glas, Keramik, gebrannter Ton und dergleichen gewählt werden wird, wobei diese zur möglichst dichten Packung vorteilhaft in Partikel-, insbesondere in Pulverform, vorliegen, kann das Wärmekapazitätsteil einen Mantel aufweisen, welcher zumindest teilweise, vorzugsweise jedoch vollständig, mit dem zweiten Material gefüllt ist. Ein pulverförmiges zweites Material kann lose, also ungebunden, in den es umgebenden Mantel des Wärmekapazitätsteils eingefüllt sein. Alternativ hierzu kann das zweite Material auch durch einen Binder gebundene, vorzugsweise mineralische, Partikel aufweisen. Als Binder kommen thermisch beständige Harze oder sonstige Kunststoffe in Frage, welche ebenfalls, verglichen mit dem oben genannten ersten Material, niedrige Wärmeleitfähigkeit aufweisen. Je nach Festigkeit des gebundenen zweiten Materials, kann der Mantel entfallen.

Der Mantel des Wärmekapazitätsteils kann grundsätzlich aus beliebigem Material hergestellt sein. Ein Mantel aus Metall bietet jedoch eine einfache Möglichkeit, das Wärmekapazitätsteil mit guter Effizienz wärmeübertragungsmäßig mit dem Wärmeleitungsteil zu koppeln, da der metallische Mantel quasi als Vermittlerbauteil Wärme zwischen dem Wärmeleitungsteil und dem zweiten Material ohne wesentliche Verluste übertragen kann.

Eine möglichst gleichmäßige Wärmeleitung von der Wärmequelle zu dem Wärmeleitungsteil und damit eine möglichst gleichmäßige Erwärmung des Wärmekapazitätsteils der Heizeinrichtung der erfindungsgemäßen Bodenheizvorrichtung kann dadurch erhalten werden, dass die oben genannte Erstreckungsachse des Anbringungsabschnitts der Wärmequelle und die Verlaufsachse des Kopplungsabschnitts des Wärmeleitungsteils im Wesentlichen parallel sind. Hierdurch kann außerdem eine kompakte und wenig Bauraum beanspruchende Ausgestaltung der Heizeinrichtung realisiert werden.

Die Wärmequelle kann längs der Erstreckungsachse eine größere Länge aufweisen, als die Wärmeübertragungsanordnung, so dass die Wärmequelle axial über die Wärmeübertragungsanordnung hinaus stehen kann. Dadurch ist es möglich, dass die Wärmequelle eine Mehrzahl von aufeinander folgenden Anbringungsabschnitten aufweisen kann, in welchen jeweils eine Wärmeübertragungsanordnung angeordnet ist. Vorzugsweise sind dann die Anbringungsabschnitte auf Grund der oben genannten bevorzugten geradlinigen Stabform kollinear, was eine gute Raumausnutzung des am Plattenträgerelement zur Aufnahme der Heizeinrichtung vorhandenen Bauraums ermöglicht.

Bei der Anordnung einer Mehrzahl von axial aufeinander folgenden Anbringungsabschnitten sind besonders bevorzugt zwei in axialer Richtung unmittelbar aufeinander folgende Anbringungsabschnitte ein- und derselben Wärmequelle durch einen Abstandsabschnitt voneinander getrennt. In diesem Abstandsabschnitt herrschen dann vorteilhafterweise andere Wärmeübertragungsbedingungen zwischen der Wärmequelle und deren um die Erstreckungsachse herum gelegene Außenumgebung, da an dem Abstandsabschnitt gerade keine Wärmeübertragungsanordnung vorgesehen ist. Bevorzugt liegt die Wärmequelle im Abstandsabschnitt wenigstens umfangsabschnittsweise frei. An diesen frei liegenden Stellen des Abstandsabschnitts kann die Wärmequelle wesentlich höhere Temperaturen erreichen als dort, wo eine Wärmeübertragungsanordnung vorgesehen ist. Somit kann an den Abstandsabschnitten der Wärmequelle eine sehr schnelle Wärmeabgabe der Bodenheizvorrichtung an einen darüber liegenden Fußboden oder/und Estrich erfolgen. Somit stehen die Anbringungsabschnitte bereit, um Wärme möglichst großflächig und effizient von der Wärmequelle an den zu beheizenden Boden abzugeben und stehen die Abstandsabschnitte bereit, um ein möglichst kurzfristiges Ansprechen der erfindungsgemäßen Bodenheizvorrichtung zu ermöglichen, so dass zwischen Inbetriebnahme der Bodenheizvorrichtung und einem ersten wahrnehmbaren Heizerfolg eine möglichst kurze Zeitspanne liegt. Somit wird die Trägheit üblicher Bodenheizvorrichtungen vermieden oder wenigstens verringert.

Zur Bereitstellung der wärmeübertragungsmäßigen Kopplung kann vorgesehen sein, dass das Wärmeleitungsteil den Anbringungsabschnitt der Wärmequelle oder/und den Kopplungsabschnitt des Wärmekapazitätsteils an wenigstens einer Seite berührt. Da die Effizienz einer Wärmeübertragung von der Wärmequelle in das Wärmeleitungsteil und zwischen Wärmeleitungsteil und Wärmekapazitätsteil jedoch maßgeblich von der Fläche abhängt, durch welche hindurch Wärme zwischen den genannten Bauteilen übertragen wird, ist es bevorzugt, wenn das Wärmeleitungsteil den Anbringungsabschnitt oder/und den Kopplungsabschnitt an wenigstens zwei Seiten berührt, wobei diese Seiten an den jeweiligen Teilen: Wärmequelle oder/und Wärmekapazitätsteil, bevorzugt einander gegenüber liegen, so dass der Anbringungsabschnitt oder/und der Kopplungsabschnitt sandwichartig von dem Wärmeleitungsteil sein kann.

Besonders bevorzugt umgibt das Wärmeleitungsteil den Anbringungsabschnitt oder/und den Kopplungsabschnitt um die Erstreckungsachse bzw. die Verlaufsachse herum berührend, da dies die bei gegebener Gestalt von Anbringungsabschnitt oder/und Kopplungsabschnitt die größtmögliche Wärme übertragende Kontaktfläche bereitstellt.

Vorzugsweise ist das Wärmeleitungsteil ein im Wesentlichen flächiges Bauteil, welches in zwei zueinander orthogonale Hauptabmessungsrichtungen eine wesentlich größere Abmessung aufweist, als in einer zu den beiden Hauptabmessungsrichtungen orthogonalen dritten Raumrichtung. Besonders bevorzugt ist dann die Erstreckungsachse oder/und die Verlaufsachse der wenigstens einen Wärmequelle bzw. des wenigstens einen Wärmekapazitätsteils in der bzw. parallel zu der von den beiden Haupterstreckungsrichtungen des Wärmeleitungsteils aufgespannten Ebene orientiert.

Zur Bereitstellung einer möglichst effektiven Heizfunktion der Bodenheizvorrichtung kann vorgesehen sein, dass das Wärmeleitungsteil eine vom Plattenträgerbauteil weg weisende Wärmeabgabeseite und eine dieser entgegengesetzte, dem Plattenträgerbauteil zugewandte Trägerseite aufweist. Die Trägerseite ruht somit auf dem Plattenträgerbauteil und stützt sich an diesem ab, während die Wärmeabgabeseite des Wärmeleitungsteils die von der wenigstens einen Wärmequelle oder/und von dem Wärmekapazitätsteil abgegebene Wärmemenge an den zu beheizenden Boden abgibt. Um diese Wärme möglichst verlustfrei abgeben zu können, ist die Wärmeabgabeseite vorzugsweise wenigstens abschnittsweise, bevorzugt vollständig freiliegend, so dass der Bodenaufbau des zu beheizenden Bodens das Wärmeleitungsteil an der Wärmeabgabeseite möglichst großflächig kontaktieren kann. Damit die Bodenheizvorrichtung möglichst leicht stapelbar und in vielen Bedarfssituationen einsetzbar ist, ist die Wärmeabgabeseite überdies vorzugsweise eben.

Besonders bevorzugt ist die Heizeinrichtung in das Plattenträgerbauteil eingesenkt, so dass die Wärmeabgabeseite des Wärmeleitungsteils bündig mit der Außenseite des die Heizeinrichtung tragenden Plattenträgerbauteils ist. In diesem Falle können das Plattenträgerbauteil und die Heizeinrichtung eine einfach zu verlegende quaderförmige Gestalt mit ebener Auflagefläche zur Auflage auf einen Untergrund und mit ebenso ebener und zur Auflagefläche vorzugsweise paralleler Abstützfläche aufweisen, auf welche sich ein Bodenaufbau des zu beheizenden Bodens abstützen kann.

Um die Ebenheit der Wärmeabgabeseite gewährleisten zu können, ist es vorteilhaft, wenn die Wärmequelle oder/und das Wärmekapazitätsteil auf der Trägerseite des Wärmeleitungsteils angeordnet ist bzw. angeordnet sind.

Um die Heizeinrichtung möglichst schnell und gleichmäßig erwärmen zu können, kann daran gedacht sein, dass eine Wärmeübertragungsanordnung mit einer Mehrzahl von mit Abstand voneinander angeordneten Anbringungsabschnitten wärmeübertragungsmäßig gekoppelt ist. Beispielsweise können die Anbringungsabschnitte an entgegengesetzten Endbereichen der Wärmeübertragungsanordnung vorgesehen sein, wobei nicht ausgeschlossen sein soll, dass auch zwischen derartigen endseitigen Anbringungsabschnitten ein oder mehrere weitere Anbringungsabschnitte vorgesehen sind.

Dabei schließt die Richtung des Abstands zwischen zwei unmittelbar benachbarten Anbringungsabschnitten mit deren jeweiligen Erstreckungsachsen vorzugsweise einen Winkel ein, wobei der Winkel vorzugsweise ein rechter Winkel ist, die Anbringungsabschnitte also vorzugsweise parallel zueinander vorgesehen sind. Die oben genannten bevorzugten endseitigen Anbringungsabschnitte sind dann in Endbereichen der Wärmeübertragungsanordnung bezogen auf die Abstandsrichtung angeordnet.

Wenngleich grundsätzlich nicht ausgeschlossen sein soll, dass eine Wärmeübertragungsanordnung mit mehreren Anbringungsabschnitten wärmeübertragungsmäßig gekoppelt ist, welche zu ein- und derselben Wärmequelle gehören, beispielsweise einem mäanderförmigen Heizelement an welchem geradlinige Heizelementabschnitte die Anbringungsabschnitte bilden können, sollte für einen besonders schnellen Energieeintrag von der wenigstens einen Wärmequelle in die Wärmeübertragungsanordnung bevorzugt vorgesehen sein, dass verschiedene mit ein- und derselben Wärmeübertragungsanordnung gekoppelte Anbringungsabschnitte an unterschiedlichen Wärmequellen ausgebildet sind. Außerdem erhöht dies die Möglichkeit zur Realisierung unterschiedlicher Betriebsarten, da dann eine Heizeinrichtung durch Betreiben nur einer Untermenge von mit ein und derselben Wärmeübertragungsanordnung gekoppelten Anbringungsabschnitten erwärmt werden kann, was zu einer möglicherweise gewünschten niedrigeren Alternativbetriebstemperatur führt. Wenn dagegen eine möglichst hohe Betriebstemperatur der Heizeinrichtung gewünscht ist, können vorzugsweise alle an unterschiedlichen Wärmequellen ausgebildeten Anbringungsabschnitte ein und derselben Übertragungsanordnung gleichzeitig betrieben werden.

Dann, wenn zwei oder mehrere Anbringungsabschnitte mit ein- und derselben Wärmeübertragungsanordnung wärmeübertragungsmäßig gekoppelt sind, kann zur besonders effizienten Erzielung der oben genannten Nachheizwirkung vorgesehen sein, dass zwischen zwei unmittelbar benachbarten Anbringungsabschnitten derselben Wärmeübertragungsanordnung mindestens ein Kopplungsabschnitt derart vorgesehen ist, dass die Verlaufsachse des wenigstens einen Kopplungsabschnitts mit Abstand von der Erstreckungsachse wenigstens eines der Anbringungsabschnitte gelegen ist. Bevorzugt ist dann der Kopplungsabschnitt mit Abstand von den Erstreckungsachsen beider unmittelbar benachbarter Anbringungsabschnitte gelegen, damit die von der Wärmequelle ausgehende Wärme sicher über das Wärmeleitungsteil zu dem wenigstens einen Kopplungsabschnitt geleitet wird und ein thermischer Kurzschluss zwischen Anbringungsabschnitt (also Wärmequelle) und Kopplungsabschnitt (also Wärmekapazitätsteil) vermieden wird.

Zur möglichst gleichmäßigen Erwärmung der Wärmeübertragungsanordnung, insbesondere des Wärmeleitungsteils, ist dabei bevorzugt die Verlaufsachse des wenigstens einen Kopplungsabschnitts parallel zu der wenigstens einen Erstreckungsachse wenigstens eines der Anbringungsabschnitte, bevorzugt beider unmittelbar benachbarter Anbringungsabschnitte, vorgesehen.

Als "unmittelbar benachbart" gelten im Sinne der vorliegenden Anmeldung Anbringungsabschnitte dann, wenn sich zwischen Ihnen entlang des sie verbindenden Wärmeleitungsteils kein weiterer Anbringungsabschnitt befindet. Die Zwischenanordnung von Kopplungsabschnitten ist daher für die Eigenschaft des Unmittelbar-benachbart-Seins von Anbringungsabschnitten unschädlich. Entsprechendes gilt mutatis mutandis für unmittelbar benachbarte Kopplungsabschnitte.

Um einen möglichst gleichmäßigen und nachhaltigen Nachheizeffekt durch die passiven Wärmekapazitätsteile nach Abschalten der aktiven Wärmequellen bereitstellen zu können, ist es vorteilhaft, wenn zwischen zwei unmittelbar benachbarten Anbringungsabschnitten derselben Wärmeübertragungsanordnung eine Mehrzahl von Kopplungsabschnitten vorgesehen ist. Dabei ist eine Anordnung vorteilhaft, bei welcher die Verlaufsachsen der Kopplungsabschnitte mit Abstand sowohl voneinander als auch von der Erstreckungsachse wenigstens eines Anbringungsabschnitts, im Falle von mehreren Anbringungsabschnitten vorzugsweise von den Erstreckungsachsen von mehreren, besonders bevorzugt von allen Anbringungsabschnitten, gelegen sind.

Um die Wärmeübertragungsanordnung mit hoher Effektivität bei geringem Bauraumbedarf sicherstellen zu können, ist bevorzugt daran gedacht, dass die Verlaufsachsen der Mehrzahl von Kopplungsabschnitten parallel zueinander und auch parallel zur Erstreckungsachse wenigstens eines Anbringungsabschnitts, im Falle von mehreren Anbringungsabschnitten vorzugsweise zu den Erstreckungsachsen mehrerer, besonders bevorzugt aller Anbringungsabschnitte mit Abstand von diesen angeordnet sind.

Um die durch das passive, lediglich durch die aktive Wärmequelle erwärmte Kapazitätsteil bereitgestellte Nachheizwirkung an der Wärmeübertragungsanordnung in möglichst großem Umfang nutzen zu können, erstreckt sich vorzugsweise das wenigstens eine Wärmekapazitätsteil in axialer Richtung längs der Ertsreckungsachse der Wärmequelle im Wesentlichen über die gesamte Länge des Wärmeleitungsteils. Besonders bevorzugt hat das Wärmekapazitätsteil aus Gründen einer effektiven Bauraumausnutzung im Wesentlichen die gleiche axiale Länge wie das Wärmeleitungsteil. Um mit der Bodenheizvorrichtung möglichst gezielt und effektiv Wärme in den in der Regel über ihr liegenden Boden eintragen zu können, kann vorgesehen sein, dass ein Plattenträgerbauteil eine Mehrzahl von Heizeinrichtungen aufweist, welche gesondert voneinander betreibbar sind. Hierzu kann die Bodenheizvorrichtung mit einem Steuergerät gekoppelt sein, welches die Ansteuerung der durch unmittelbare Energiezufuhr aktiv beheizbaren Wärmequellen auf Grund geeignet ausgewählter Parameter ausführt.

Als Plattenträgerbauteil kann ein beliebiges geeignetes Trägerbauteil in Frage kommen. Bevorzugt kann aus Gründen eines möglichst geringen Gewichts eines Plattenträgerbauteils dieses aus gebundenen Partikeln, wie etwa Fasern oder/und Granulat, gebildet sein, etwa durch Beimengung eines entsprechenden Binders, etwa eines Binders auf Polyurethanbasis. Derartige Plattenträgerbauteile weisen zwischen den gebundenen Partikeln in der Regel gasgefüllte Hohlräume auf, die nicht nur für die zuvor beschriebene Gewichtsreduktion sorgen, sondern ebenfalls thermisch isolierend wirken.

Bevorzugt ist das Plattenträgerbauteil aus gebundenen Elastomerpartikeln, also Elastomerfasern oder/und Elastomergranulat, gebildet, so dass es zum einen eine gute thermische Isolierung zu dem Untergrund bietet, auf welchem es aufliegt, etwa Rohbeton im Bau. Zum anderen kann somit bereits das Plattenträgerbauteil einen Beitrag auch zur Schallisolierung des Bodens leisten, wenngleich es eine zusätzliche Trittschallisolierung in Wohnbereichen nicht ersparen wird. In diesem Fall wird das Plattenträgerbauteil auf die bereits verlegte Trittschalldämmung aufgelegt.

Das Plattenträgerbauteil ist zur Vermeidung eines übermäßig hohen Bodenaufbaus plattenförmig ausgebildet und weist somit in zwei zueinander orthogonalen Haupterstreckungsrichtungen eine wesentlich größere Abmessung auf, als in der zu den beiden Haupterstreckungsrichtungen orthogonalen Dickenrichtung.

Dementsprechend können die Plattenträgerbauteile plattenartig auf Untergrund verlegt werden. Eine so durch Verlegung aus mehreren Bodenheizvorrichtungen gebildete Bodenheizvorrichtungsanordnung ist vorteilhaft derart angeordnet, dass die einzelnen Plattenträgerbauteile in wenigstens einer Haupterstreckungsrichtung, vorzugsweise in beiden Haupterstreckungsrichtungen, mit Abstand voneinander angeordnet sind, so dass ein übergeordneter Bodenaufbau, wie etwa Estrich, zwischen Plattenträgerbauteilen auf dem auch die Plattenträgerbauteile tragenden Boden abgestützt sein kann, was dem Bodenaufbau erwünschte Stabilität verleiht.

Weiter ist gerade die hier vorgeschlagene erfindungsgemäße Bodenheizvorrichtung auf Grund des mit dem wenigstens einen Wärmekapazitätsteil erzielten Nachheizeffekts besonders geeignet zum Einsatz bei niedrigen oder zeitlich schwankenden Energiereserven, da die Wärmekapazitätsteile für eine zeitliche Glättung der Wärmeabgabe der Heizeinrichtungen bei zeitlich schwankendem Energieeintrag in die Wärmequellen sorgen.

Daher umfasst die Bodenheizvorrichtung und die oben geschilderte Bodenheizvorrichtungsanordnung vorteilhafterweise eine Energieversorgungsvorrichtung, welche regenerativ gewonnene Energie bereitstellt und energieversorgungsmäßig mit der Bodenheizvorrichtung gekoppelt ist. Dies kann beispielsweise eine Photovoltaikanlage, ein Windkraftgenerator oder ähnliches sein. Derartige Energieversorgungsvorrichtungen unterliegen stärkeren zeitlichen Schwankungen der von ihnen bereitgestellten Energie als von herkömmlichen Kraftwerken bespeiste Netze.

Zusätzlich kann zur weiteren Glättung von zeitlichen Energieversorgungsschwankungen ein Energieakkumulator zwischen der Energieversorgungsvorrichtung und der Bodenheizvorrichtung bzw. der Bodenheizvorrichtungsanordnung zwischengeschaltet sein.

Bevorzugt ist die oben diskutierte Wärmequelle eine elektrische Wärmequelle, also beispielsweise ein elektrischer Heizstab. Dennoch soll nicht ausgeschlossen sein, dass auch andere Wärmequellen, wie etwa von erwärmtem Fluid durchströmte Leitungen und dergleichen als Wärmequelle Anwendung finden können.

Weiter ermöglicht die oben diskutierte erfindungsgemäße Bodenheizvorrichtung ein vorteilhaftes Verfahren zum Betreiben derselben. Entsprechendes gilt für den Betrieb einer aus mehreren Bodenheizvorrichtungen gebildeten Bodenheizvorrichtungsanordnung, insbesondere wie sie oben beschrieben ist.

Genauer gestattet der durch die Wärmekapazitätsteile bereitgestellte Nachheizeffekt an den Wärmeübertragungsanordnungen einen intermittierenden Heizbetrieb der Wärmequellen, ohne dass dadurch eine zeitliche Schwankung der Temperatur über dem von der Bodenheizvorrichtung oder der Bodenheizvorrichtungsanordnung beheizten Boden hinreichend spürbar wird. Insbesondere ermöglicht die hier diskutierte Bodenheizvorrichtung das vorteilhafte Betreiben lediglich einer Untermenge der tatsächlich vorhandenen Bodenheizvorrichtungen in Abhängigkeit von der für den Betrieb bereitstehenden Energiemenge.

Daher kann das vorliegende Verfahren an einer Bodenheizvorrichtungsanordnung, bei welcher eine Mehrzahl von Bodenheizvorrichtungen gesondert voneinander betreibbar sind, folgende Schritte umfassen:
a.) Erfassen einer zum Betrieb der Bodenheizvorrichtungsanordnung bereitstehenden Energiemenge (bei der bereitstehenden Energiemenge kann es sich auch um eine auf Grund vorliegender ermittelter oder/und gemessener Parameter in unmittelbarer Zukunft erwartete Energiemenge handeln),
b.) Auswählen einer Untermenge von Bodenheizvorrichtungen in Abhängigkeit von der in Schritt a.) erfassten bereitstehenden Energiemenge und
c.) Betreiben der Untermenge von Bodenheizvorrichtungen durch Energieversorgung der dort vorhandenen Wärmequellen.

Somit kann selbst bei einer nur geringen zur Versorgung der Bodenheizvorrichtungsanordnung bereitstehenden Energiemenge diese wenigstens auf jene Bodenheizvorrichtungen verteilt werden, welche bevorzugt beheizt werden sollen. Es kann sich dabei um fensternahe Bodenheizvorrichtungen in Wohnbereichen oder um sitzgruppennahe Bodenheizvorrichtungen und dergleichen handeln.

Die Untermenge von Bodenheizvorrichtungen kann überdies abhängig von weiteren Parametern, wie etwa der Tageszeit, unterschiedlich ausgewählt sein, und zwar selbst bei im Wesentlichen konstanter erfasster bereitstehender Energiemenge.

So kann beispielsweise tagsüber durch Beheizen gezielter Bodenheizvorrichtungen der Wärmeabfluss aus einem Wohngebäude verringert werden, während zur Abendzeit vor allem bevorzugte Wohn- und Aufenthaltsbereiche beheizt werden können.

Die Schritte a.) bis c.) können, etwa nach Ablauf einer vorbestimmten Zeitspanne, iterativ durchlaufen werden, wobei zur möglichst großflächigen Erwärmung eines Bodens bzw. Wohnraums selbst bei nur einer geringen bereitstehenden Energiemenge bevorzugt die Untermenge an Bodenheizvorrichtungen eines nachfolgenden Durchlaufs der Verfahrensschritte wenigstens eine andere Bodenheizvorrichtung, vorzugsweise eine Mehrzahl anderer Bodenheizvorrichtungen oder sogar ausschließlich andere Bodenheizvorrichtungen umfasst als die Untermenge eines unmittelbar vorhergehenden Verfahrensdurchlaufs.

Dadurch können einzelne Bodenheizvorrichtungen selbst mit nur einer geringen bereitstehenden Energiemenge auf ihre herkömmliche Betriebstemperatur erwärmt werden, wobei diese Betriebstemperatur nach Abschalten der Wärmequellen durch die Wärmekapazitätsteile nur verzögert abgebaut wird. Werden also nach einem Durchlauf der Schritte a.) bis c.) in einem weiteren Durchlauf andere Bodenheizvorrichtungen der Bodenheizvorrichtungsanordnung mit Energie versorgt, so sind jene des unmittelbar vorhergehenden Durchlaufs noch erwärmt. Zu diesen treten dann die Bodenheizvorrichtungen der Untermenge des nachfolgenden Durchlaufs hinzu.

Nachfolgend wird die folgende Erfindung anhand der beiliegenden Figuren dargestellt. Es stellt dar:
- Fig. 1: eine Ausführungsform einer erfindungsgemäßen Bodenheizvorrichtung,
- Fig. 2: einen Querschnitt durch die Bodenheizvorrichtung von Fig. 1 entlang der Schnittebene II - II in Fig. 1, und
- Fig. 3: eine schematische Darstellung einer Bodenheizvorrichtungsanordnung mit mehreren Bodenheizvorrichtungen.

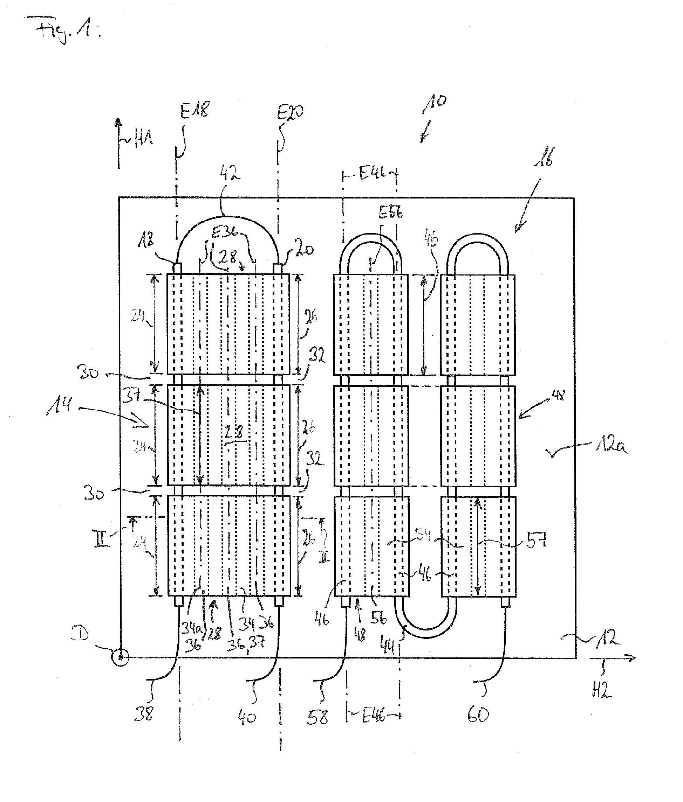

In Fig. 1 ist eine erfindungsgemäße Ausführungsform einer Bodenheizvorrichtung allgemein mit 10 bezeichnet.

Die Bodenheizvorrichtung 10 umfasst ein Plattenträgerbauteil 12, welches in dem in in Fig. 1 dargestellten Beispiel rechteckig, insbesondere quadratisch ist, welches jedoch auch andere Formen, etwa mit einer Sechseck-Grundfläche, aufweisen kann.

Bei der Darstellung von Fig. 1 blickt man auf die Abstützfläche 12a des Plattenträgerbauteils, welche im Verlegungszustand dem von der Bodenheizvorrichtung 10 zu erwärmenden Bodenaufbau zugewandt ist.

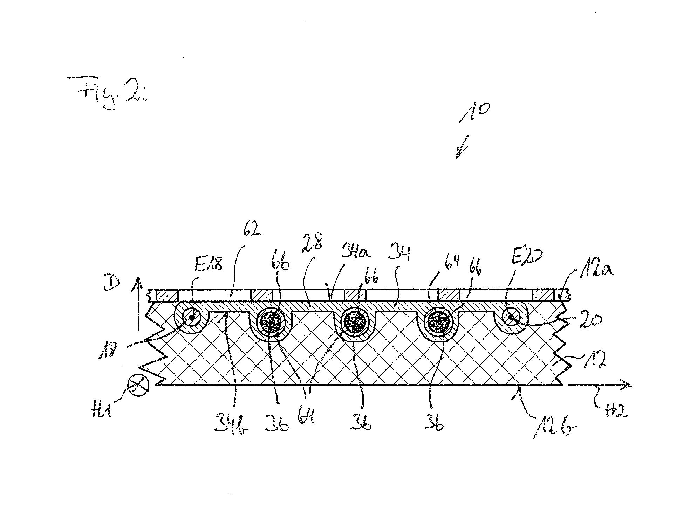

Auf der entgegengesetzten Seite der Abstützfläche 12a liegt die Auflagefläche (siehe Auflagefläche 12b in Fig. 2) des Plattenträgerbauteils 12, mit welchem dieses auf einem Untergrund, etwa Rohbeton, einer Trittschalldämmung oder dergleichen, aufliegt.

In die Abstützfläche 12a des Plattenträgerbauteils 12 vorzugsweise eingesenkt sind eine erste Heizeinrichtung 14 und eine zweite Heizeinrichtung 16, die sich lediglich in ihrer Bauart unterscheiden.

Die Heizeinrichtungen 14 und 16 sind lediglich beispielhaft dargestellt und können auch andere Gestalt aufweisen. Vor allem ist in der Regel bevorzugt, dass an einem Plattenträgerbauteil 12 lediglich eine Art, insbesondere Bauart, von Heizeinrichtungen vorgesehen ist, um die Fertigung und Montage derselben zu erleichtern.

Die Heizeinrichtung 14 kann zwei Wärmequellen 18 und 20 aufweisen, welche bevorzugt Stabheizelemente sind. Die Stabheizelemente haben bevorzugt einen Kreisquerschnitt, sind also zylindrisch.

Jede der vorzugsweise stabförmigen Wärmequellen 18 und 20 kann eine Mehrzahl von, beispielsweise drei, Anbringungsabschnitten 24 bzw. 26 aufweisen, längs welchen die jeweiligen Wärmequellen 18 bzw. 20 mit einer Wärmeübertragungsanordnung 28 wärmeübertragungsmäßig gekoppelt sind.

Da die in Fig. 1 an der Heizeinrichtung 14 dargestellten Wärmeübertragungsanordnungen 28 im Wesentlichen identisch sind, wird nachfolgend lediglich die in Fig. 1 ganz unten dargestellte Wärmeübertragungsanordnung 28 stellvertretend für die übrigen Wärmeübertragungsanordnungen 28 beschrieben werden.

Die beiden Wärmequellen 18 und 20 erstrecken sich vorzugsweise jeweils längs einer Erstreckungsachse E18 und E20, welche bei den hier vorzugsweise verwendeten Stabheizelementen die Mittelachse der Heizelemente bildet (siehe auch Fig. 2).

Wie in Fig. 1 zu erkennen ist, können die Wärmequellen 18 und 20 längs ihrer Erstreckungsachsen E18 bzw. E20 eine wesentlich größere Abmessung als längs zu den Erstreckungsachsen E18 und E20 orthogonalen Radiusachsen aufweisen, d.h. die Abmessung der Wärmequellen 18 und 20 längs ihrer Erstreckungsachsen E18 und E20 kann ein Vielfaches, vorzugsweise mehr als ein Fünffaches, besonders bevorzugt mehr als ein Zehnfaches, der Abmessung der Wärmequellen orthogonal zur jeweiligen Erstreckungsachse längs der in Fig. 1 nicht dargestellten Radiusachsen betragen.

Die Wärmequellen 18 und 20 sind vorzugsweise derart angeordnet, dass ihre Erstreckungsachsen E18 und E20 parallel zueinander verlaufen, wobei bevorzugt die Erstreckungsachsen E18 und E20 auch längs einer Haupterstreckungsachse H1 und orthogonal zu einer Haupterstreckungsachse H2 des Plattenträgerbauteils 12 verlaufen, welche bei dem in Fig. 1 beispielhaft dargestellten rechteckigen, insbesondere quadratischen, Plattenträgerbauteil mit den Richtungen der Plattenränder zusammenfallen können.

Die einzelnen Anbringungsabschnitte 24 und 26 sind aus Gründen einer möglichst effektiven Bauraumausnutzung bezüglich ihrer jeweils zugeordneten Wärmequelle 18 bzw. 20 und deren Erstreckungsachsen E18 bzw. E20 kollinear angeordnet, wobei besonders bevorzugt zwischen zwei unmittelbar in axialer Richtung aufeinander folgenden Anbringungsabschnitten 24 bzw. 26 je ein Abstandsabschnitt 30 bzw. 32 vorgesehen ist, an dem andere Wärmeübergangsverhältnisse zwischen den beteiligten Wärmequellen 18 und 20 und ihrer radial äußeren Außenumgebung herrschen als in den Anbringungsabschnitten 24 und 26, wo die Wärmequellen 18 und 20 von einer Wärmeübertragungsanordnung 28 vorzugsweise vollständig in Umfangsrichtung umgeben sind (s.a. Fig. 2).

Bevorzugt liegen die Wärmequellen 18 und 20 in den Abstandsabschnitten 30 bzw. 32 wenigstens umfangsabschnittsweise frei, so dass dort die an der Wärmequelle bei deren Betrieb entstehende Wärme schlechter abgeführt wird, als in den Anbringungsabschnitten 24 bzw. 26.

Die Folge ist eine stärkere Erwärmung der Wärmequellen 18 und 20 in den Anbringungsabschnitten 30 bzw. 32, wodurch wiederum in der Folge ein über der Abstützfläche 12a liegender Bodenaufbau eines von der Bodenheizvorrichtung 10 zu erwärmenden Bodens lokal stärker erwärmt werden kann, als in den verglichen dazu großflächigen Bereichen, in welchen eine Wärmeübertragungsanordnung 28 vorgesehen ist.

Die Wärmeübertragungsvorrichtung 28 umfasst ein Wärmeleitungsteil 34, welches ein erstes Material umfasst, vorzugsweise aus einem ersten Material gebildet ist, das eine erste, höhere Wärmeleitfähigkeit aufweist. Beispielsweise kann das Wärmeleitungsteil 34 aus Metallen, insbesondere aus Kupfer oder Aluminium, gebildet sein, da diese gute Wärmeleitungseigenschaften aufweisen.

Als Faustregel gilt, dass die meisten elektrisch leitenden Materialien als erstes Material in Frage kommen, da in der Regel eine elektrische Leitfähigkeit mit einer thermischen Leitfähigkeit korreliert, abgesehen von pathologischen Fällen wie Diamant, der hier schon aus wirtschaftlichen und fertigungstechnischen Gründen völlig uninteressant ist.

In Fig. 1 blickt man auf die Wärmeabgabeseite 34a des Wärmeleitungsteils 34, welche dem zu erwärmenden Boden im Verlegungszustand zugewandt ist.

Bezogen auf eine Abstandsrichtung zwischen den Erstreckungsachsen E18 und E20 sind die Anbringungsabschnitte 24 und 26 der Wärmequellen 18 und 20 an der Wärmeübertragungsanordnung 28 und insbesondere am Wärmeleitungsteil 34 endseitig vorgesehen. Zwischen diesen unmittelbar benachbarten Anbringungsabschnitten 24 und 26 an der Wärmeübertragungsanordnung 28 kann ein passives Wärmekapazitätsteil oder eine Mehrzahl von passiven Wärmekapazitätsteilen 36 angeordnet sein. In dem in Fig. 1 dargestellten Beispiel sind drei Wärmekapazitätsteile strichliniert dargestellt, da sie hinter der tatsächlich in Fig. 1 sichtbaren Wärmeabgabeseite 34a des Wärmeleitungsteils 34 gelegen sind.

Die passiven Wärmekapazitätsteile 36, die ihre Wärmeenergie ausschließlich von den aktiv mit Energie versorgten Wärmequellen 18 und 20 erhalten, sind vorzugsweise ebenfalls stabförmig ausgebildet und verlaufen längs einer Verlaufsachse E36.

Vorzugsweise sind die einzelnen Verlaufsachsen E36 der zu ein- und derselben Wärmeübertragungsanordnung 28 gehörenden Wärmekapazitätsteile 36 zueinander parallel und mit Abstand voneinander angeordnet. Ebenso bevorzugt sind die Wärmekapazitätsteile 36 mit Abstand von den sie einfassenden Wärmequellen 18 und 20 bzw. deren Anbringungsabschnitten 24 und 26 vorgesehen, um thermische Kurzschlüsse zwischen einer Wärmequelle 28 oder/und 20 und einem Wärmekapazitätsteil 36 oder/und zwischen Wärmekapazitätsteilen 36 untereinander zu vermeiden.

Zwischen einem Wärmekapazitätsteil 36 und einer unmittelbar benachbarten Wärmequelle oder einem unmittelbar benachbarten weiteren Wärmekapazitätsteil ist also vorzugsweise stets ein von einem Abschnitt des Wärmeleitungsteils 34 gebildeter Steg als Wärmebrücke vorgesehen.

Vorzugsweise sind die Wärmekapazitätsteile der weiteren Wärmeübertragungsanordnungen 28 der Heizvorrichtung 14 kollinear zu den jeweiligen Wärmekapazitätsteilen 36 der hier beschriebenen, in Fig. 1 ganz unten liegenden Wärmeübertragungsanordnung vorgesehen, um den am Plattenträgerbauteil 12 vorhandenen Bauraum möglichst effektiv zu nutzen.

Die Wärmequellen 18 und 20 verfügen über elektrische Anschlüsse 38 und 40 und können über eine elektrische Leitung 42 in Reihe miteinander geschaltet sein. Die elektrischen Leitungen 38 und 40 sind elektrische Energieversorgungsleitungen.

Die in Fig. 1 auf der rechten Seite des Plattenträgerbauteüs 12 gezeigte Heizeinrichtung 16 unterscheidet sich von der oben ausführlich beschriebenen Heizeinrichtung 14 im Wesentlichen dadurch, dass sie lediglich eine einzige Wärmequelle 44 umfasst, der alle an der zweiten Heizeinrichtung 16 ausgebildeten Anbringungsabschnitte 46 zugeordnet sind.

Die zwischen zwei in radialer Richtung unmittelbar benachbarten Anbringungsabschnitten 46 der Wärmequelle 44 gelegene Wärmeübertragungsanordnung 48 kann im Gegensatz zur Wärmeübertragungsanordnung 28 der Heizeinrichtung 14 lediglich ein Wärmekapazitätsteil 56 aufweisen, deren Verlaufsachse E56 vorzugsweise parallel zu den Erstreckungsachsen E46 der Anbringungsabschnitte 46 der Heizeinrichtung 16 verläuft. Insofern gilt das zur Heizeinrichtung 14 Gesagte für die Heizeinrichtung 16 entsprechend.

Eine Wärmeübertragungsanordnung kann auch mit mehr als zwei Anbringsungabschnitten gekoppelt sein, wie an der mittleren Wärmeübertragungsanordnung 48 der Heizeinrichtung 16 strichliniert angedeutet ist, die mit vier

Anbringungsabschnitten gekoppelt ist.

Die Energieversorgung der Heizeinrichtung 16 kann durch elektrische Leitungen 58 und 60 erfolgen.

Wie weiter aus der Fig. 1 hervorgeht, erstrecken sich die dort dargestellten Wärmekapazitätsteile 36 und 56 vorzugsweise im Wesentlichen über die axiale Länge der zugeordneten Wärmeübertragungsanordnung 28 bzw. 48, und zwar besonders bevorzugt genau über diese Länge. Somit bilden die Wärmekapazitätsteile 36 bzw. 56 im Wesentlichen über ihre gesamte jeweilige Länge einen Kopplungsabschnitt 37 bzw. 57, längs welchem sie in wärmeübertragungsmäßig an das Wärmeleitungsteil 34 bzw. 54 der jeweiligen zugeordneten Wärmeübertragungsanordnung 28 bzw. 48 gekoppelt sind.

In Fig. 2 ist ein Querschnitt durch einen Abschnitt der Bodenheizvorrichtung 10 von Fig. 1 entlang der Schnittebene II - II in Fig. 1 dargestellt. Die Zeichenebene der Fig. 2 ist parallel zu einer Ebene, welche durch die Haupterstreckungachse H2 und die Dickenachse D aufgespannt wird. Die Dickenachse D ist in Fig. 1 orthogonal zu deren Zeichenebene.

Zu erkennen ist in Fig. 2 ist zunächst die Auflageseite 12b des Plattenträgerbauteils 12, welches vorzugsweise aus gebundenen Elastomerpartikeln, insbesondere Elastomerfasern oder/und Elastomergranulat, gebildet sein kann. Bevorzugt enthält das Plattenträgerbauteil Gasvolumen, welche der Gewichtsreduzierung und der Verringerung der Wärmeleitfähigkeit des Plattenträgerbauteils 12 dienen.

In Fig. 2 ist weiter ein optionales, die Wärmeübertragungsanordnung 28 am Plattenträgerbauteil 12 sicherndes Maschengewebe 62 dargestellt, welches mit der Abstützseite 12a des Plattenträgerbauteils verbunden, insbesondere verklebt, sein kann. Dabei soll nicht ausgeschlossen sein, dass dieses Maschengewebe 62 auch mit der Wärmeabgabeseite 34a des Wärmeleitungsteils 34 verbunden, insbesondere verklebt, ist.

Vorzugsweise schließt die Wärmeabgabeseite 34a des Wärmeleitungsteils 34 bündig an die Abstützseite 12a des Plattenträgerbauteils 12 an. Dadurch wird eine vorteilhafte im Wesentlichen ebene Gesamtaußenfläche der Bodenheizvorrichtung 10 bereitgestellt.

Wie in Fig. 2 weiter zu erkennen ist, sind vorzugsweise sowohl die Wärmequellen 18 und 20, als auch die Wärmekapazitätsteile 36 auf der dem Plattenträgerbauteil 12 zugewandten Trägerseite 34b des Wärmeleitungsteils 34 vorgesehen, so dass diese die Wärmeabgabeseite 34a nicht stören.

Die Wärmekapazitätsteile 36 können einen Mantel 64 aufweisen, in welchen ein zweites Material 66 eingefüllt sein kann, das eine niedrigere Wärmeleitfähigkeit besitzt als das erste Material des Wärmeleitungsteils 34.

In dem in Fig. 2 gezeigten Beispiel ist das Wärmeleitungsteil 34 als einstückiges Bauteil dargestellt, beispielsweise als ein Gussteil, insbesondere Druckgussteil. Dies muss jedoch nicht so sein. Das Wärmeleitungsteil kann aus mehreren Bauteilen gebildet sein. Weiter kann das Wärmeleitungsteil auch umformtechnisch, beispielsweise durch Biegen einer Metallfolie oder einer anderen Folie aus geeignetem Material, hergestellt sein.

Werden nun die in Fig. 2 dargestellten Wärmequellen 18 und 20 ausgehend von einem abgekühlten Nichtbetriebszustand mit Energie versorgt, so erwärmen sich diese und mit diesen das Wärmeleitungsteil 34 ausgehend von den Wärmequellen 18 und 20 zu dem in Fig. 2 mittleren Wärmekapazitätsteil 36 hin.

Diese Aufheizphase instationärer Wärmeleitung dauert bis zum Erreichen eines thermischen Gleichgewichts, in welchem das Wärmeleitungsteil 34 so viel Wärme an seine Außenumgebung abgibt, wie es in gleicher Zeit von den Wärmequellen 18 und 20 aufnimmt. In diesem stationären Zustand der Wärmeübertragungsanordnung 28 hat diese über alle ihre Bestandteile im Wesentlichen dieselbe Temperatur.

Wird dann die Energiezufuhr zu den Wärmequellen 18 und 20 beendet, gibt die Wärmeübertragungsanordnung 28 weiter Wärme an ihre in der Regel kältere Umgebung ab.

Eine durch diese Wärmeabgabe bewirkte Abkühlung der Wärmeübertragungsanordnung 28 erfolgt in den Bereichen, in denen die Wärmeübertragungsanordnung 28 im Wesentlichen ausschließlich durch das Wärmeleitungsteil 34 gebildet ist, schneller als dort, wo zusätzlich die Wärmekapazitätsteile 36 vorgesehen sind. Somit wird durch die Wärmekapazitätsteile 36 eine Wärmespeicherwirkung mit daraus erzielbarem Nachheizeffekt erzielt.

Diese Abkühlungsphase, welche erneut von instationärer Wärmeleitung gekennzeichnet ist, dauert wiederum im Wesentlichen so lange an, bis sie die gesamte Wärmeübertragungsanordnung im Wesentlichen eine einheitliche Temperatur erreicht hat und sich erneut mit seiner Außenumgebung in thermischem Gleichgewicht befindet.

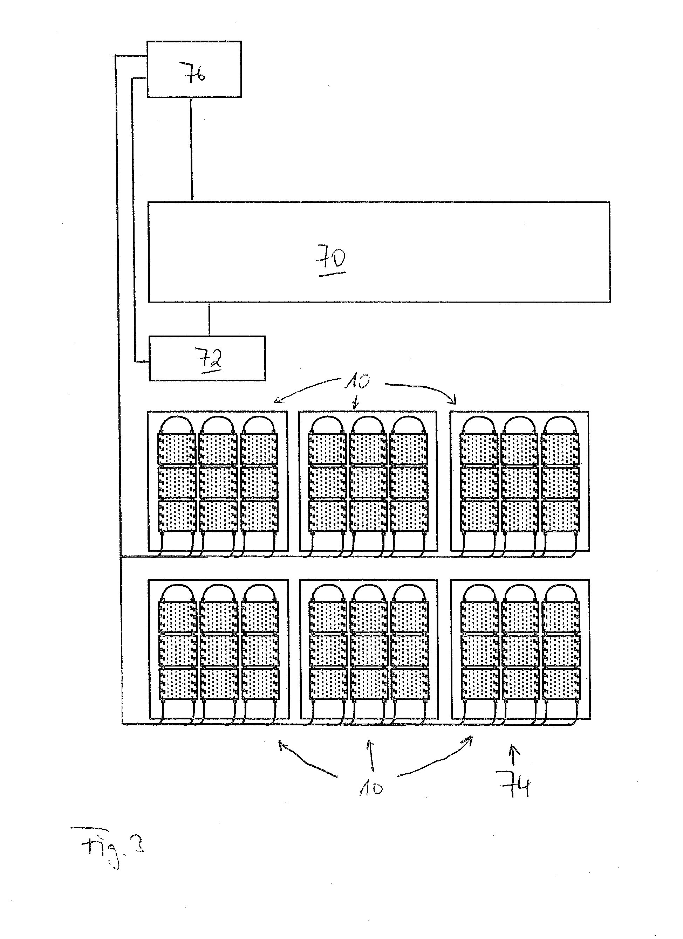

In Fig. 3 ist eine Bodenheizvorrichtungsanordnung mit zugehöriger Energieversorgung und Steuergerät grobschematisch dargestellt.

Als Energiequelle kann eine regenerativ Energie erzeugende Anlage 70, etwa eine Photovoltaikanlage, Windkraftanlage und dergleichen, dienen, welche Energie abhängig von äußeren Bedingungen, wie Wetter, Wind und dergleichen, erzeugt.

Diese Energieerzeugungsanlage 70 kann zur Pufferung mit einem Energiespeicher 72, etwa einem elektrischen Akkumulator, verbunden sein, um die von der Energieerzeugungsanlage 70 erzeugte Energie speichern und zu Zeitpunkten bereitstellen zu können, zu denen die Energieerzeugungsanlage 70 auf Grund der herrschenden äußeren Umstände nicht oder nur in verringertem Maße zur Energieerzeugung in der Lage ist.

Weiter ist beispielhaft dargestellt eine Bodenheizvorrichtungsanordnung 74 aus sechs Bodenvorrichtungen 10.

Wie in Fig. 3 zu erkennen ist, sind die einzelnen Bodenheizvorrichtungen 10 der Bodenheizvorrichtung 74 bevorzugt derart verlegt, dass sie längs jeder ihrer Haupterstreckungsachsen H1 und H2 mit Abstand voneinander angeordnet sind, so dass sich ein in der Regel über den Bodenheizvorrichtungen 10 befindender Bodenaufbau, wie etwa Estrich, in den zwischen den einzelnen Bodenheizvorrichtungen 10 gebildeten Zwischenräumen an dem stabilen Untergrund abstützen kann, welcher auch die einzelnen Bodenheizvorrichtungen 10 trägt.

Weiter verfügt die hier dargestellte Anordnung bevorzugt über ein Steuergerät 76, mit welchem der Betrieb der Bodenheizvorrichtungsanordnung 74 steuerbar ist. Die Energieerzeugungsanlage 70 ist nicht nur an den Akkumulator 72, sondern auch an das Steuergerät 76 angeschlossen, so dass das Steuergerät 76 auf Grund ermittelter Größen, etwa auf Grund eines Heizbedarfs im Bereich der Bodenheizvorrichtungsanordnung 74 oder/und auf Grund einer durch die Energieversorgungsanlage 70 pro Zeiteinheit bereitgestellten Energiemenge, also der augenblicklich abrufbaren Leistung, oder/und auf Grund eines Füllgrads des Akkumulators 72, beurteilt, ob die Bodenheizvorrichtungsanordnung 74 überhaupt betrieben werden soll und wenn ja, ob die Energieversorgung derselben durch den Akkumulator 72 oder durch die Energieversorgungsanlage 70 erfolgen soll.

Weiterhin kann das Steuergerät 76 auf Grund ermittelter Werte vorbestimmter Parameter erfassen, ob die gesamte Bodenheizvorrichtungsanordnung 74 oder lediglich eine Untermenge der darin vorhandenen Bodenheizvorrichtungen 10 zur Erwärmung derselben mit Energie versorgt werden soll.

Beispielsweise kann dann, wenn nur eine geringe Leistung zur Energieversorgung der Bodenheizvorrichtungsanordnung 74 zur Verfügung steht, von dem Steuergerät 76 lediglich eine Untermenge der Bodenheizvorrichtungen 10 zur Energieversorgung ausgewählt und mit Energie versorgt werden. Nach Ablauf einer vorbestimmten Zeit oder nach Erreichen einer vorbestimmten Temperatur kann dann erneut vom Steuergerät 76 ermittelt werden, welche Energiemenge zur Versorgung der Bodenheizvorrichtungsanordnung abrufbar ist, woraufhin eine weitere Untermenge der Bodenheizvorrichtungen 10 ausgewählt und mit Energie versorgt werden kann. Dabei sind die im nachfolgenden Ablauf ausgewählten Bodenheizvorrichtungen vorteilhafterweise wenigstens teilweise oder sogar vollständig von jenen der unmittelbar vorhergehend ausgewählten Bodenheizvorrichtungen 10 verschieden, so dass über eine vorbestimmte Zeitspanne hinweg eine möglichst große Fläche eines Bodens auch mit nur verhältnismäßig wenig zur Verfügung stehender Energie effektiv beheizt werden kann.

Das Steuergerät 76 kann zum Betrieb der Bodenheizvorrichtungsanordnung 74 mit einem Zeitmesser oder/und mit Temperatursensoren zusammenwirken und deren Signale verarbeiten.

## Patentansprüche

1. Bodenheizvorrichtung, umfassend ein Plattenträgerbauteil (12), welches wenigstens eine Heizeinrichtung (14; 16) trägt, die wenigstens eine Wärmequelle (18, 20; 44) und eine Wärmeübertragungsanordnung (28; 48) umfasst, wobei die Wärmeübertragungsanordnung (28; 48) ein mit der Wärmequelle (18, 20; 44) längs eines Anbringungsabschnitts (24, 26; 46) derselben wärmeübertragungsmäßig gekoppeltes, vom Plattenbauteil (18) gesondert ausgebildetes Wärmeleitungsteil (34; 54) mit einem ersten Material mit einer ersten Wärmeleitfähigkeit und wenigstens ein vom Plattenbauteil (12) gesondert ausgebildetes Wärmekapazitätsteil (36; 56) umfasst, welches mit dem Wärmeleitungsteil (34; 54) längs eines Kopplungsabschnitts (37; 57) des Wärmekapazitätsteils (36; 56) wärmeübertragungsmäßig gekoppelt ist, wobei das Wärmekapazitätsteil (36; 56) ein zweites Material (66) mit einer zweiten Wärmeleitfähigkeit aufweist, welche niedriger ist als die erste Wärmeleitfähigkeit.

2. Bodenheizvorrichtung nach Anspruch 1,
**dadurch gekennzeichnet, dass** der Anbringungsabschnitt (24, 26; 46) der Wärmequelle (18, 20; 44) längs einer Erstreckungsachse (E18, E20; E46) verläuft, längs welcher die Wärmequelle (18, 20; 44) eine wesentlich größere Abmessung besitzt als längs zweier zueinander und jeweils zur Erstreckungsachse (E18, E20; E46) orthogonaler Radiusachsen, vorzugsweise geradlinig stabförmig ist, wobei die Wärmeübertragungsanordnung (28; 48), insbesondere das Wärmeleitungsteil (34; 54), im Anbringungsabschnitt (24, 26; 46) der Wärmequelle (18, 20; 44) in Wärmeübertragungsverbindung mit dieser vorgesehen ist und sich sowohl eine vorbestimmte Strecke längs der Erstreckungsachse (E18, E20; E46) gemeinsam mit der Wärmequelle (18, 20; 44) als auch orthogonal hierzu von der Wärmequelle (18, 20; 44) weg erstreckt.

3. Bodenheizvorrichtung nach einem der vorhergehenden Ansprüche,
**dadurch gekennzeichnet, dass** der Kopplungsabschnitt (37; 57) des Wärmekapazitätsteils (36; 56) längs einer Verlaufsachse (E36; E56) verläuft, längs der das Wärmekapazitätsteil (36; 56) eine wesentlich größere Abmessung besitzt als längs zweier zueinander und jeweils zur Verlaufsachse (E36; E56) orthogonaler Radialachsen, vorzugsweise geradlinig stabförmig ist.

4. Bodenheizvorrichtung nach einem der vorhergehenden Ansprüche,
**dadurch gekennzeichnet, dass** das Wärmekapazitätsteil (36; 56) einen Mantel (64) aufweist, welcher zumindest teilweise, vorzugsweise vollständig mit dem zweiten Material (66), etwa einem mineralischen Material, wie Quarz, Glas, Keramik, gebrannter Ton und dergleichen, bevorzugt in gebundener oder ungebundener Pulverform, gefüllt ist.

5. Bodenheizvorrichtung nach Anspruch 2 und einem der Ansprüche 3 oder 4,
**dadurch gekennzeichnet, dass** die Erstreckungsachse (E18, E20; E46) und die Verlaufsachse (E36; E56) parallel sind.

6. Bodenheizvorrichtung nach einem der Ansprüche 2 bis 5 unter Einbeziehung der Ansprüche 2 und 3,
**dadurch gekennzeichnet, dass** die Wärmequelle (18, 20; 44) längs der Erstreckungsachse (E18, E20; E46) eine größere Länge aufweist als die Wärmeübertragungsanordnung (28; 48), wobei die Wärmequelle (18, 20; 44) bevorzugt eine Mehrzahl von aufeinander folgenden, vorzugsweise kollinearen, Anbringungsabschnitten (24, 26; 46) aufweist, in welchen jeweils eine Wärmeübertragungsanordnung (28; 48) angeordnet ist, wobei besonders bevorzugt zwei in axialer Richtung unmittelbar aufeinander folgende Anbringungsabschnitte (24, 26; 46) durch einen Abstandsabschnitt (30, 32) voneinander getrennt sind, in welchem andere Wärmeübergangsbedingungen zwischen der Wärmequelle (18, 20; 44) und deren um die Erstreckungsachse (E18, E20; E46) herum gelegene Außenumgebung vorliegen als im Anbringungsabschnitt (24, 26; 46), wobei die Wärmequelle (18, 20; 44) im Abstandsabschnitt (30, 32) bevorzugt wenigstens umfangsabschnittsweise freiliegt.

7. Bodenheizvorrichtung nach einem der vorhergehenden Ansprüche,
**dadurch gekennzeichnet, dass** das Wärmeleitungsteil (34; 54) den Anbringungsabschnitt (24, 26; 46) der Wärmequelle (18, 20; 44) oder/und den Kopplungsabschnitt (37; 57) des Wärmekapazitätsteils (36; 56) zur Bereitstellung der wärmeübertragungsmäßigen Kopplung an wenigstens einer Seite berührt, bevorzugt an zwei gegenüberliegenden Seiten berührt, besonders bevorzugt in Umfangsrichtung um die Erstreckungsachse (E18, E20; E46) beziehungsweise Verlaufsachse herum berührend umgibt.

8. Bodenheizvorrichtung nach Anspruch 7,
**dadurch gekennzeichnet, dass** das Wärmeleitungsteil (34; 54) eine vom Plattenträgerbauteil (12) wegweisende, vorzugsweise ebene und besonders bevorzugt auch wenigstens abschnittsweise freiliegende, Wärmeabgabeseite (34a) und eine dieser entgegengesetzte, dem Plattenträgerbauteil (12) zugewandte Trägerseite (34b) aufweist, wobei die Wärmequelle (18, 20; 44) oder/und das Wärmekapazitätsteil (36; 56) auf der Trägerseite (34b) angeordnet ist beziehungsweise sind.

9. Bodenheizvorrichtung nach einem der vorhergehenden Ansprüche, unter Einbeziehung des Anspruchs 2,
**dadurch gekennzeichnet, dass** eine Wärmeübertragungsanordnung (28; 48) mit einer Mehrzahl von mit Abstand voneinander angeordneten Anbringungsabschnitten (24, 26; 46) wärmeübertragungsmäßig gekoppelt ist, wobei die Richtung des Abstands zwischen zwei unmittelbar benachbarten Anbringungsabschnitten (24, 26; 46) mit deren jeweiligen Erstreckungsachsen (E18, E20; E46) einen Winkel, vorzugsweise einen rechten Winkel, einschließt, wobei besonders bevorzugt verschiedene mit ein und derselben Wärmeübertragungsanordnung (28; 48) gekoppelte Anbringungsabschnitte (24, 26; 46) an unterschiedlichen Wärmequellen (18, 20; 44) ausgebildet sind.

10. Bodenheizvorrichtung nach Anspruch 9,
**dadurch gekennzeichnet, dass** zwischen zwei unmittelbar benachbarten Anbringungsabschnitten (24, 26; 44) derselben Wärmeübertragungsanordnung (28; 48) wenigstens ein Kopplungsabschnitt (37; 57) derart vorgesehen ist, dass die Verlaufsachse (E36; E56) des wenigstens einen Kopplungsabschnitts (37; 57) mit Abstand von der Erstreckungsachse (E18, E20; E46) wenigstens eines der Anbringungsabschnitte (24, 26; 46), vorzugsweise von den Erstreckungsachsen (E18, E20; E46) beider Anbringungsabschnitte (24, 26; 46), gelegen ist, wobei bevorzugt die Verlaufsachse (E36; E56) des wenigstens einen Kopplungsabschnitts (37; 57) parallel zu der wenigstens einen Erstreckungsachse (E18, E20; E46) wenigstens eines der Anbringungsabschnitte (24, 26; 46) vorgesehen ist.

11. Bodenheizvorrichtung nach Anspruch 10,
**dadurch gekennzeichnet, dass** zwischen zwei unmittelbar benachbarten Anbringungsabschnitten (24, 26) derselben Wärmeübertragungsanordnung (28) eine Mehrzahl von Kopplungsabschnitten (37) derart vorgesehen ist, dass die Verlaufsachsen (E36) der Kopplungsabschnitte (37) mit Abstand sowohl voneinander als auch von der Erstreckungsachse (E18, E20) wenigstens eines der zwei Anbringungsabschnitte (24, 26), vorzugsweise von den Erstreckungsachsen (E18, E20) beider Anbringungsabschnitte (24, 26), gelegen sind, wobei die Verlaufsachsen (E36) der Kopplungsabschnitte (37) vorzugsweise parallel zueinander und parallel zu wenigstens einem der Anbringungsabschnitte (24, 26) mit Abstand von diesem angeordnet sind.

12. Bodenheizvorrichtung nach einem der vorhergehenden Ansprüche, **dadurch gekennzeichnet, dass** sich das wenigstens eine Wärmekapazitätsteil (36; 56), vorzugsweise die Mehrzahl von Wärmekapazitätsteilen (36; 57) in axialer Richtung längs der Erstreckungsachse (E18, E20; E46) des Anbringungsabschnitts (24, 26; 46) im Wesentlichen über die gesamte Länge des Wärmeleitungsteils (34; 54) erstreckt.

13. Bodenheizvorrichtung nach einem der vorhergehenden Ansprüche,
**dadurch gekennzeichnet, dass** ein Plattenträgerbauteil (12) eine Mehrzahl von Heizeinrichtungen (14, 16) aufweist, welche gesondert voneinander betreibbar sind.

14. Bodenheizvorrichtungsanordnung mit einer Mehrzahl von Bodenheizvorrichtungen nach einem der Ansprüche 1 bis 13,
**dadurch gekennzeichnet, dass** die Bodenheizvorrichtungen in wenigstens einer Haupterstreckungsrichtung (H1, H2) des jeweiligen Plattenträgerbauteils (12), vorzugsweise in zwei zueinander orthogonalen Haupterstreckungsrichtung (H1, H2) des jeweiligen Plattenträgerbauteils (12), mit Abstand von einander angeordnet sind, wobei die Bodenheizvorrichtungsanordnung (74) vorzugsweise wenigstens eine Anlage (70) zur Bereitstellung regenerativer Energie, wie etwa Photovoltaikanlage, Windkraftgenerator und dergleichen, umfasst, welche mit wenigstens einer Wärmequelle (18, 20; 44), vorzugsweise mit einer Mehrzahl von Wärmequellen (18, 20; 44), besonders bevorzugt mit allen Wärmequellen (18, 20; 44) , der Mehrzahl von Bodenheizvorrichtungen (10) energieübertragungsmäßig gekoppelt ist.

15. Verfahren zum Betrieb einer Bodenheizvorrichtungsanordnung (74) mit mit einer Mehrzahl von Bodenheizvorrichtungen (10) nach einem der Ansprüche 1 bis 13, insbesondere einer Bodenheizvorrichtungsanordnung (74) nach Anspruch 14,
**dadurch gekennzeichnet, dass** eine Untermenge der Mehrzahl von Bodenheizvorrichtungen (10) gesondert von einander betreibbar sind, wobei das Verfahren folgende Schritte umfasst:
a.) Erfassen einer zum Betrieb der Bodenheizvorrichtungsanordnung (74) bereitstehenden Energiemenge,
b.) in Abhängigkeit von der erfassten bereitstehenden Energiemenge auswählen einer Untermenge von Bodenheizvorrichtungen (10),
c.) Betreiben der Untermenge von Bodenheizvorrichtungen (10), wobei die Schritte a.) bis c.) vorzugsweise nach Ablauf einer vorbestimmten Zeitspanne iterativ durchlaufen werden, wobei besonders bevorzugt die Untermenge eines nachfolgenden Durchlaufs wenigstens eine andere Bodenheizvorrichtung (10), vorzugsweise eine Mehrzahl anderer Bodenheizvorrichtungen (10) oder sogar ausschließlich andere Bodenheizvorrichtungen (10) umfasst als die Untermenge eines unmittelbar vorhergehenden Durchlaufs.
